(19) Europäisches Patentamt
European Patent Office
Office européen des brevets

(11) **EP 1 983 710 A1**

(12) **EUROPEAN PATENT APPLICATION**
published in accordance with Art. 158(3) EPC

(43) Date of publication:
**22.10.2008 Bulletin 2008/43**

(51) Int Cl.:
***H04L 27/00*** (2006.01)

(21) Application number: **06833390.5**

(22) Date of filing: **27.11.2006**

(86) International application number:
**PCT/JP2006/323586**

(87) International publication number:
**WO 2007/091362 (16.08.2007 Gazette 2007/33)**

(84) Designated Contracting States:
**DE FR GB**

(30) Priority: **08.02.2006 JP 2006030991**

(71) Applicant: **Pioneer Corporation
Tokyo 153-8654 (JP)**

(72) Inventor: **KUBUKI, Toshiaki
Kawagoe-shi
Saitama 350-8555 (JP)**

(74) Representative: **Sajda, Wolf E. et al
Meissner, Bolte & Partner GbR
Postfach 86 06 24
81633 München (DE)**

(54) **CARRIER REPRODUCING DEVICE, AND DEMODULATING DEVICE**

(57)     An object is to provide a carrier regenerator which produces a regenerated carrier signal for performing synchronous detection on a modulated signal with good trackability and a demodulator which produces a demodulated signal.

Orthogonal signal generation means (2) produce from a modulated signal Sin(t) an I signal SI(t) and a Q signal SQ(t) which have phases orthogonal to each other. Ratio generation means (3) detect the trigonometric ratio R and the signs GI(*) and GQ(*) of the I signal SI(t) and the Q signal SQ(t). Carrier generation means (4) perform an inverse trigonometric operation on the trigonometric ratio R, thereby producing a phase $\alpha(t)$ of the trigonometric ratio R. Furthermore, the carrier generation means (4) make a phase correction to the phase $\alpha(t)$ based on the signs GI(*) and GQ(*) to yield a correct phase $\varphi(t)$. Then, based on the phase $\varphi(t)$, the carrier generation means (4) produce regenerated carrier signals SCI(t) and SCQ(t) which correspond to the carrier component of the I signal SQ(t) and the Q signal SQ(t), respectively. Then, synchronizing means (5) demodulate the I signal SI(t) and the Q signal SQ(t) based on the regenerated carrier signals SCI(t) and SCQ(t), thereby producing a demodulated signal SB.

*FIG.4*

EP 1 983 710 A1

**Description**

<u>TECHNICAL FIELD</u>

The present invention relates to a carrier regenerator which produces a carrier to be used for demodulating modulated signals and to a demodulator which reproduces demodulated signals using the carrier.

<u>BACKGROUND ART</u>

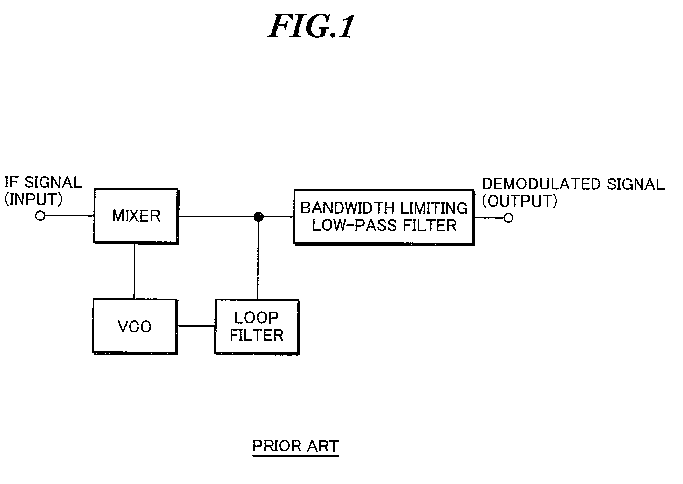

Conventionally, a number of receivers in information and communication systems employ the PLL (Phase Locked Loop) synchronous detection when demodulating a received signal into a demodulated signal.
As shown in Fig. 1, in the PLL synchronous detection, an IF signal (modulated signal) at an intermediate frequency and an oscillated signal generated in a voltage controlled oscillator (VCO) are mixed with each other at a mixer. The direct current component of the mixed signal (or the phase difference between the oscillated signal and the carrier) is detected in a low-pass filter (loop filter), so that PLL control is provided to the voltage controlled oscillator (VCO) to lock the oscillated signal to the carrier of the IF signal. Then, when the carrier of the IF signal and the oscillated signal from the voltage controlled oscillator are in phase with each other, a demodulated signal is delivered from a bandwidth limiting low-pass filter.

<u>DISCLOSURE OF THE INVENTION</u>

<u>PROBLEMS TO BE SOLVED BY THE INVENTION</u>

To perform the aforementioned PLL synchronous detection, it is necessary to provide the PLL loop with an increased loop bandwidth with respect to the modulation bandwidth. This loop bandwidth is generally determined by the characteristics of the aforementioned loop filter. Thus, for example, raising the cutoff frequency of the loop filter to increase the loop bandwidth may cause deteriorated resistance to wide-band jitter. On the other hand, lowering the cutoff frequency of the loop filter to enhance the resistance to jitter may cause deteriorated trackability resulting in desired synchronous detection being made difficult to perform.
As such, there is a trade-off, for example, between narrowing the loop bandwidth to prevent adverse effects caused by jitter or the like and increasing the loop bandwidth with respect to the modulation bandwidth. It was thus difficult to perform synchronous detection with good trackability through the optimal design of the loop bandwidth.
The present invention was developed in view of these conventional problems. It is therefore an object of the present invention to provide a carrier regenerator which provides good trackability for modulated signals and produces a carrier that is required to perform synchronous detection or the like. It is another object of the present invention to provide a demodulator which demodulates a signal using the carrier to regenerate a demodulated signal.
It is still another object of the present invention to provide an inventive carrier regenerator which produces a carrier without a PLL loop and an inventive demodulator which demodulates a signal using the carrier to regenerate a demodulated signal.

<u>MEANS FOR SOLVING THE PROBLEMS</u>

The present invention according to claim 1 provides a carrier regenerator for producing a regenerated carrier signal from a modulated signal. The carrier regenerator includes: orthogonal signal generation means for producing from the modulated signal a first signal and a second signal which have phases orthogonal to each other; ratio generation means for producing a trigonometric ratio of the first signal and the second signal and detecting a sign of at least one of the first signal and the second signal; and carrier generation means for producing the regenerated carrier signal based on the trigonometric ratio and the sign.
The present invention according to claim 9 provides a carrier generation method for producing a regenerated carrier signal from a modulated signal. The method includes: an orthogonal signal generation step of producing from the modulated signal a first signal and a second signal which have phases orthogonal to each other; a ratio generation step of producing a trigonometric ratio of the first signal and the second signal and detecting a sign of at least one of the first signal and the second signal; and a carrier generation step of producing the regenerated carrier signal based on the trigonometric ratio and the sign.
The present invention according to claim 10 provides a demodulation method. The method includes a synchronizing step of demodulating the first signal and the second signal to produce a modulated signal based on the regenerated carrier produced by the carrier generation method according to claim 9.

BRIEF DESCRIPTION OF THE DRAWINGS

Fig. 1    is an explanatory view illustrating the fundamental principle of the conventional PLL synchronous detection.

Fig. 2    is a block diagram illustrating the configuration of a carrier regenerator and a demodulator according to an embodiment of the present invention.

Fig. 3    is an explanatory view illustrating the function of the carrier regenerator shown in Fig. 2.

Fig. 4    is a block diagram illustrating the configuration of a carrier regenerator and a demodulator according to a first example.

Fig. 5    is an explanatory view illustrating the function of the carrier regenerator shown in Fig. 4.

Fig. 6    is a block diagram illustrating the configuration of a carrier regenerator and a demodulator according to a second example.

Fig. 7    is an explanatory view illustrating the function of the carrier regenerator shown in Fig. 6.

Fig. 8    is a block diagram illustrating the configuration of a carrier regenerator and a demodulator according to a third example.

Fig. 9    is an explanatory view illustrating the function of the carrier regenerator shown in Fig. 8.

Fig. 10    is a block diagram illustrating the configuration of a carrier regenerator and a demodulator according to a fourth example.

BEST MODE FOR CARRYING OUT THE INVENTION

Now, with reference to the drawings, a description will be made to a carrier regenerator and a demodulator according to an embodiment of the present invention.

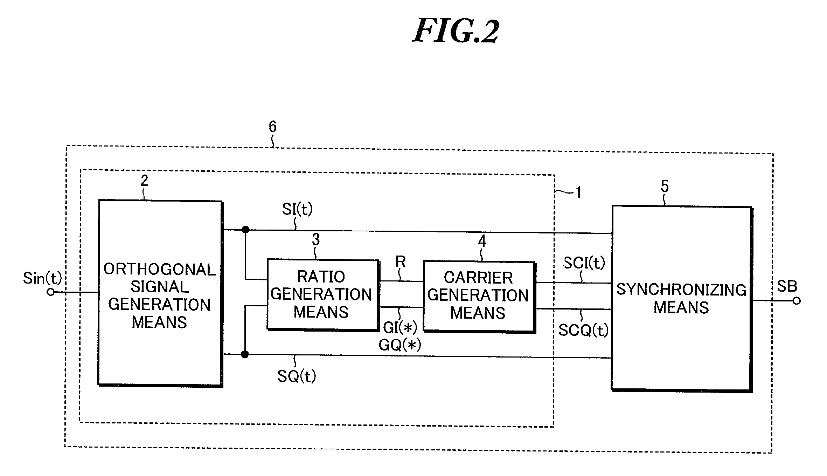

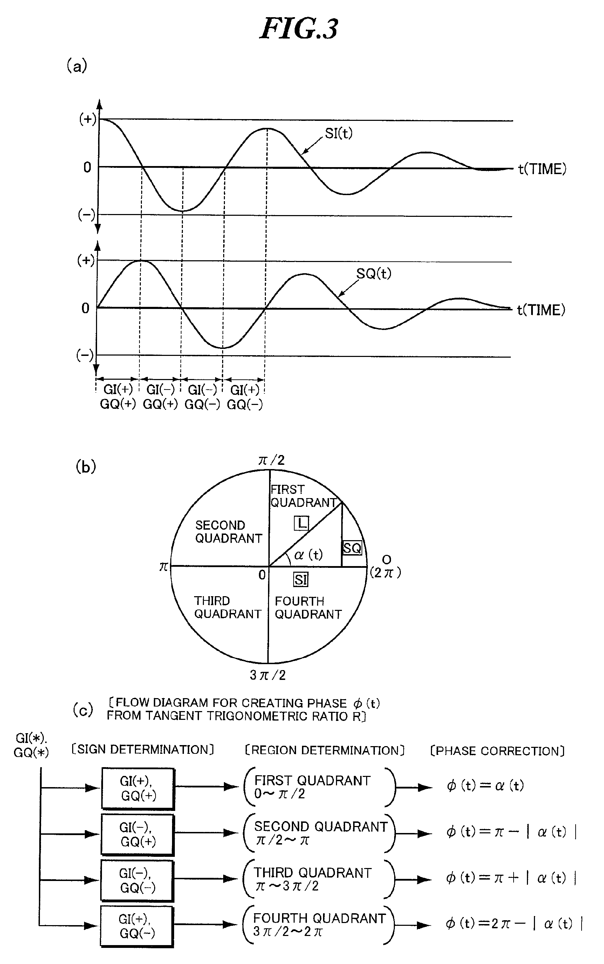

Fig. 2 is a block diagram illustrating the configuration of a carrier regenerator 1 and a demodulator 6 of the present embodiment. Fig. 3 is an explanatory view illustrating the function of the carrier regenerator 1.

In Fig. 2, the carrier regenerator 1 of the present embodiment is configured to include orthogonal signal generation means 2, ratio generation means 3, and carrier generation means 4. The demodulator 6 is configured to include synchronizing means 5 in addition to the carrier regenerator 1.

First, a description will be made to the configuration of the carrier regenerator 1.

The orthogonal signal generation means 2 receive an IF signal (modulated signal) Sin(t) produced by a frontend section (not shown) or the like, and then from the modulated signal Sin(t), produces and outputs a first signal (hereinafter referred to as "I signal") SI(t) and a second signal (hereinafter referred to as "Q signal") SQ(t), which are orthogonal to each other with a phase of 90 degrees ($\pi/2$ radian).

More specifically, for example, for convenience of explanation, let the modulated signal Sin(t) be expressed by a general formula of a baseband signal f(t) and a carrier g(t) that are shown in Equation (1) below. Then, the orthogonal signal generation means 2 mix the modulated signal Sin(t) with reference signals Sx(t) and Sy(t), which are $\pi/2$ out of phase with each other as expressed by Equations (2a) and (2b) below.

The orthogonal signal generation means 2 extract from the mixed signals X(t) and Y(t) a sideband wave component which is frequency shifted toward an angular frequency ($\omega o - \omega r$), thereby producing the I signal SI(t) and the Q signal SQ(t), which are expressed by Equations (3a) and (3b) below. Note that for the baseband signal f(t), A is the gain, k is the modulation factor, and p is the angular frequency; for the carrier g(t), $\omega o$ is the angular frequency, and $\theta(t)$ is the phase; and for the reference signals Sx(t) and Sy(t), $\omega r$ is a given angular frequency.

[Equation 1]

$$S_{in}(t) = f(t) \times g(t) = A(1 + k\cos(pt)) \times \cos(\omega_0 t + \theta(t)) \quad \cdots (1)$$

[Equation 2]

$$X(t) = S_{in}(t) \times S_x(t) = S_{in}(t) \times cos(\omega_r t) \qquad \cdots (2a)$$

$$Y(t) = S_{in}(t) \times S_y(t) = S_{in}(t) \times cos(\omega_r t + \pi/2) \qquad \cdots (2b)$$

[Equation 3]

$$SI(t) = 0.5 \times f(t) \times cos((\omega_o - \omega_r) t + \theta(t)) \qquad \cdots (3a)$$

$$SQ(t) = 0.5 \times f(t) \times sin((\omega_o - \omega_r) t + \theta(t)) \qquad \cdots (3b)$$

The ratio generation means 3 compute a trigonometric ratio R based on the instantaneous amplitude of the I signal SI(t) and the Q signal SQ(t), and further detects the polarity of the instantaneous amplitude of each signal, thereby producing sign signals GI(*) and GQ(*) indicative of the polarity of each signal. That is, as shown in Equations (4a) to (4f) below, the ratio generation means 3 are configured to compute a trigonometric ratio R or any one of tangent, sine, secant, cotangent, cosine, and cosecant.

Furthermore, the ratio generation means 3 produce the sign signal GI(*) which is expressed by GI(+) when the polarity of the I signal SI(t) is plus and by GI(-) when it is minus. On the other hand, the ratio generation means 3 produce the sign signal GQ(*) which is expressed by GQ(+) when the polarity of the Q signal SQ(t) is plus and by GQ(-) when it is minus. Note that in Equations (4a) to (4f) below, the coefficient L is the root-sum-square value SQRT $((SI(t))^2 + (SQ(t))^2)$ of the I signal SI(t) and the Q signal SQ(t).

Equation 4

| | | |
|---|---|---|
| TangentR | = SQ(t)/SI(t) | ... (4a) |
| SineR | = SQ(t)/L | ... (4b) |
| Secant R | = L/SI(t) | ... (4c) |
| Cotangent R | = SI(t)/SQ(t) | ... (4d) |
| Cosine R | = SI(t)/L | ... (4e) |
| CosecantR | = L/SQ(t) | ... (4f). |

The carrier generation means 4 perform an inverse trigonometric operation on the trigonometric ratio R produced by the ratio generation means 3, thereby computing a phase $\alpha(t)$ for the trigonometric ratio R.

That is, the carrier generation means 4 are configured to perform an inverse trigonometric operation according to the arrangement of the ratio generation means 3. That is, the carrier generation means 4 compute the phase $\alpha(t)$ by performing an inverse tangent operation (arctan(R)) on a "tangent" trigonometric ratio R; an inverse sine operation (arcsin(R)) on a "sine" trigonometric ratio R; an inverse secant operation (arcsec(R)) on a "secant" trigonometric ratio R; an inverse cotangent operation (arccot(R)) on a "cotangent" trigonometric ratio R; an inverse cosine operation (arccos(R)) on a "cosine" trigonometric ratio R; and an inverse cosecant operation (arccosec(R)) on a "cosecant" trigonometric ratio R.

Furthermore, the carrier generation means 4 make a phase correction to the phase $\alpha(t)$ based on the sign signals GI(*) and GQ(*), thereby producing a correct phase $\varphi(t)$ which matches the polarity of each of the I signal SI(t) and the Q signal SQ(t). This allows for producing the phase $\varphi(t)$ expressed by $((\omega_o - \omega_r)t + \theta(t))$.

That is, as schematically illustrated in Fig. 3(a), the I signal SI(t) and the Q signal SQ(t) may have the same polarity or different polarities at the same point in time, so that the sign of the trigonometric ratio R varies depending on the polarity. Thus, simply computing the phase $\alpha(t)$ of a trigonometric ratio R by its inverse trigonometric operation would not be enough to determine which quadrant the phase $\alpha(t)$ belongs to in the phase range (0 to $2\pi$), i.e., the first quadrant (0 to $\pi/2$), the second quadrant ($\pi/2$ to $\pi$), the third quadrant ($\pi$ to $3\pi/2$), or the fourth quadrant ($3\pi/2$ to $2\pi$).

In this context, the carrier generation means 4 determine based on the sign signals GI(*) and GQ(*) which quadrant the phase $\alpha(t)$ should belong to, and then based on the determination result, makes a phase correction to the phase $\alpha(t)$. This allows for producing a correct phase $\varphi(t)$ which belongs to the determined quadrant, i.e., the correct phase $\varphi(t)$ which matches the polarity of each of the I signal SI(t) and the Q signal SQ(t).

Now, with reference to Figs. 3(b) and (c), as a typical example of the aforementioned inverse trigonometric operations, a description will be made to the step of performing an inverse tangent operation on the "tangent" trigonometric ratio R to compute the phase $\alpha(t)$ and produce a correct phase $\varphi(t)$. First, the signs of the sign signals GI(*) and GQ(*) are determined, and then based on the property of the inverse tangent function, a region determination is made as to which quadrant the phase $\alpha(t)$ belongs to.

That is, it is determined that the phase $\alpha(t)$ should be in the first quadrant when both the sign signals GI(*) and GQ(*) are plus GI(+) and GQ(+); the phase $\alpha(t)$ in the second quadrant when they are minus GI(-) and plus GQ(+); the phase $\alpha(t)$ in the third quadrant when they are both minus GI(-) and GQ(-); and the phase $\alpha(t)$ in the fourth quadrant when they are plus GI(+) and minus GQ(-).

Now, when the phase $\alpha(t)$ was determined to be in the first quadrant after the phase correction was made based on the property of the inverse tangent function, the correct phase $\varphi(t)$ is assumed to be the phase $\alpha(t)$. When the phase $\alpha(t)$ was determined to be in the second quadrant, the correct phase $\varphi(t)$ is assumed to be the phase $(\pi - |\alpha(t)|)$ which is obtained by subtracting the absolute phase $|\alpha(t)|$ from phase $\pi$. When the phase $\alpha(t)$ was determined to be in the third quadrant, the correct phase $\varphi(t)$ is assumed to be the phase $(\pi + |\alpha(t)|)$ which is obtained by adding the absolute phase $|\alpha(t)|$ to phase $\pi$. When the phase $\alpha(t)$ was determined to be in the fourth quadrant, the correct phase $\varphi(t)$ is assumed to be the phase $(2\pi - |\alpha(t)|)$ which is obtained by subtracting the absolute phase $|\alpha(t)|$ from phase $2\pi$.

Note that a correct phase $\varphi(t)$ can also be produced in the same manner from any of "sine", "secant," "cotangent," "cosine," and "cosecant" trigonometric ratios R. That is, the sign determination and the region determination may be made based on the property of each inverse trigonometric function, and then a phase correction can be made based on the determination result, thereby producing the correct phase $\varphi(t)$.

Furthermore, based on the phase $\varphi(t)$ produced by the inverse trigonometric operation and the phase correction above, the carrier generation means 4 produce a first regenerated carrier signal SCI(t) corresponding to the I signal SI(t) and a second regenerated carrier signal SCQ(t) corresponding to the Q signal SQ(t). That is, the carrier component of the I signal SI(t) produced by the aforementioned orthogonal signal generation means 2 is a cosine function signal, and the carrier component of the Q signal SQ(t) is a sine function signal. Thus, the phase $\varphi(t)$ is applied to the cosine function to produce a regenerated carrier signal SCI(t) expressed by cos ($\varphi(t)$), while the phase $\varphi(t)$ is applied to the sine function to produce a regenerated carrier signal SCQ(t) expressed by sin ($\varphi(t)$).

Now, a description will be made to the configuration of the demodulator 6 of this embodiment.

As described above, the demodulator 6 is configured to include the carrier regenerator 1 and the synchronizing means 5.

The synchronizing means 5 mix the I signal SI(t) with the first regenerated carrier signal SCI(t), and mixes the Q signal SQ(t) with the second regenerated carrier signal SCQ(t). Furthermore, the synchronizing means 5 combine the mixed results or the two mixed signals, thereby producing a demodulated signal SB.

That is, as expressed by Equation (5) below, the regenerated carrier signals SCI(t) and SCQ(t) are used to demodulate the I signal SI(t) and the Q signal SQ(t), thereby producing the demodulated signal SB.

[Equation 5]

$$\begin{aligned} SB &= SI(t) \times SCI(t) + SQ(t) \times SCQ(t) \\ &= 0.5 \times f(t) \times \{\cos((\omega_0 - \omega_r)t + \theta(t))\}^2 + 0.5 \times f(t) \times \sin\{(\omega_0 - \omega_r)t + \theta(t)\}^2 \\ &= 0.5 \times f(t) \qquad\qquad\qquad \cdots (5) \end{aligned}$$

As described above, according to the carrier regenerator 1 of the present embodiment, the I signal SI(t) and the Q signal SQ(t) which have phases orthogonal to each other are produced from the modulated signal Sin(t) as a new modulated signal. An inverse trigonometric operation is then performed on the trigonometric ratio R of the I signal SI(t) and the Q signal SQ(t), thereby producing the phase $\alpha(t)$.

Additionally, a phase correction is made to the phase $\alpha(t)$ based on the signs GI(*) and GQ(*) of the I signal SI(t) and the Q signal SQ(t), thereby producing the correct phase φ(t). Then, based on the phase φ(t), the regenerated carrier signal SCI(t) corresponding to the I signal SI(t) and the regenerated carrier signal SCQ(t) corresponding to the Q signal SQ(t) are produced. It is thus possible to produce the regenerated carrier signals SCI(t) and SCQ(t) as a carrier for demodulating the I signal SI(t) and the Q signal SQ(t).

That is, since the I signal SI(t), the Q signal SQ(t), and the regenerated carrier signals SCI(t) and SCQ(t) satisfy a trigonometric relation at each instant, the regenerated carrier signals SCI(t) and SCQ(t) can be produced in sync with the carrier component of the I signal SI(t) and the Q signal SQ(t). Using the regenerated carrier signals SCI(t) and SCQ(t) as a carrier, the I signal SI(t) and the Q signal SQ(t) which possess the baseband signal f(t) component of the modulated signal Sin(t) can be demodulated, thereby producing the demodulated signal SB.

As such, the carrier regenerator 1 of the present embodiment greatly differs from one which detects the carrier g(t) from the modulated signal Sin(t) as in the PLL synchronous detection. Thus, the carrier regenerator 1 can produce a regenerated carrier signal without including a feedback loop system as one for the PLL synchronous detection, thereby providing good trackability. Furthermore, the necessity for making difficult adjustments such as the adjustment of the loop bandwidth of a PLL loop system can be eliminated, and a simpler configuration can be employed when compared to that for the PLL synchronous detection.

Furthermore, the regenerated carrier signals SCI(t) and SCQ(t) can be not only used to demodulate the I signal SI(t) and the Q signal SQ(t) but also utilized for various types of signal processing to be performed within the receiver (for example, to provide timing control to internal processing). It is thus possible for the carrier regenerator 1 to contribute to the functional improvement of the receiver.

Furthermore, the carrier regenerator 1 of the present embodiment has advantageous effects on the detection of a modulated signal obtained by linear modulation, and can perform synchronous detection, for example, on a modulated signal obtained by AM modulation or AM stereo modulation.

The demodulator 6 of the present embodiment carries out demodulation using the I signal SI(t), the Q signal SQ(t), and the regenerated carrier signals SCI(t) and SCQ(t), which are produced by the carrier regenerator 1. This allows for producing the demodulated signal SB.

Note that the carrier regenerator 1 of the embodiment described above makes a phase correction to the phase α(t) to thereby produce the correct phase φ(t), in the case of which the aforementioned "region determination" is to be made using the sign signals GI(*) and GQ(*) related to the I signal SI(t) and the Q signal SQ(t). However, when the "region determination" can be made from only either one of the sign signal GI(*) or GQ(*) based on the property of the inverse tangent function, it is not always necessary to use both the sign signals GI(*) and GQ(*). It is essential to use at least one of the sign signals for making the "region determination" so long as the determination can be made as to which quadrant the phase α(t) computed from the trigonometric ratio R should be in.

Furthermore, according to the carrier regenerator 1 described above, the sideband wave component that is shifted towards the angular frequency (ωo - ωr) by the orthogonal signal generation means 2 is employed as the I signal SI(t) and the Q signal SQ(t). However, the sideband wave component that is shifted towards an angular frequency (ωo + ωr) may also be employed as the I signal SI(t) and the Q signal SQ(t).

Furthermore, the carrier regenerator 1 and the demodulator 6 of the present embodiment described above may be formed in hardware such as transistor circuits or LSIs (integrated circuit device). Alternatively, a computer program which provides the same function as the hardware would do may be prepared. Then, DSPs (digital signal processor) or MPUs (microprocessor) may be operated on the computer program, thereby providing so-called software communications (software receptions).

Furthermore, the carrier regenerator 1 and the demodulator 6 may be formed of analog circuits. Alternatively, they can also be formed of digital circuits which receive an analog to digital converted modulated signal Sin(t) for digital signal processing to produce the regenerated carrier signals SCI(t) and SCQ(t) and the demodulated signal SB.

First Example

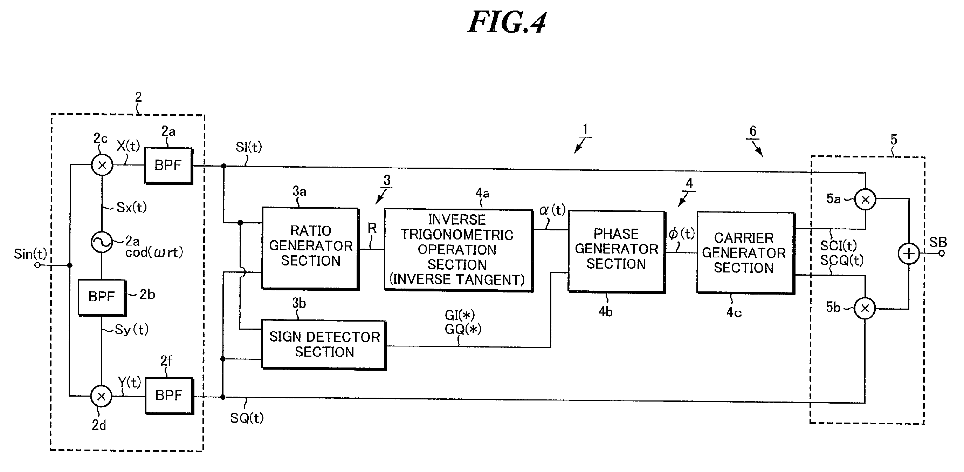

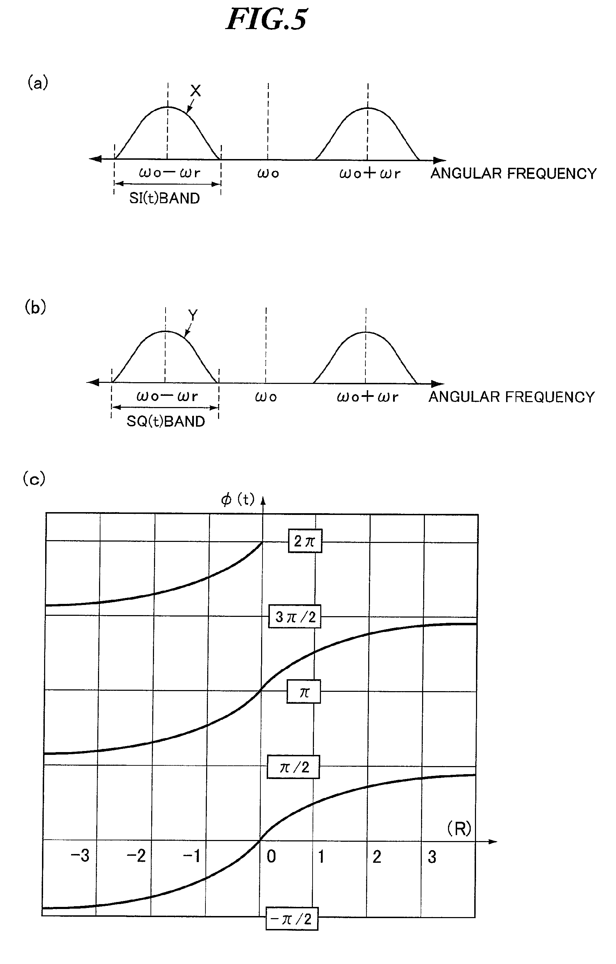

Now, with reference to Figs. 4 and 5, a description will be made to a carrier regenerator and a demodulator according to an example. Fig. 4 is a block diagram illustrating the configuration of the carrier regenerator 1 and the demodulator 6 of the present example, in which the components that are the same as or equivalent to those of Fig. 2 are indicated with the same symbols. Fig. 5 is an explanatory view illustrating the function of the carrier regenerator 1.

Note that for convenience of explanation, a description will be made assuming, as appropriate, that the modulated signal Sin(t) is the linear modulated wave shown in Equation (1) above.

In Fig. 4, the carrier regenerator 1 of the present example is configured to include an orthogonal signal generator section 2, a ratio generator section 3a, a sign detector section 3b, a phase generator section 4b, and a carrier generator section 4c. The ratio generation means 3 shown in Fig. 2 are formed of the ratio generator section 3a and the sign detector section 3b, while the carrier generation means 4 are formed of an inverse tangent operation section 4a, a phase generator section 4b, and a carrier generator section 4c. The demodulator 6 is formed of the carrier regenerator 1 and a synchronizer section 5.

First, a description will be made to the configuration of the carrier regenerator 1.

The orthogonal signal generator section 2 is configured to include an oscillator 2a for generating a cosine reference signal Sx(t) at a predetermined angular frequency ωr, a phase shifter 2b for phase-shifting the reference signal Sx(t) by π/2, multipliers 2c and 2d, and band-pass filters 2e and 2f.

Upon reception of the modulated signal Sin(t) from a frontend section (not shown) or the like, the multiplier 2c mixes the reference signal Sx(t) with the modulated signal Sin(t), thereby producing a mixed signal X(t). The multiplier 2d mixes a reference signal Sy(t), which has been phase-shifted at the phase shifter 2b, with the modulated signal Sin (t) to thereby produce a mixed signal Y(t).

Then, as shown in Fig. 5(a), the band-pass filter 2e extracts as the I signal SI(t) the sideband wave component X of the mixed signal X(t) which has been shifted towards the angular frequency (ωo - ωr). As shown in Fig. 5(b), the band-pass filter 2f extracts as the Q signal SQ(t) the sideband wave component Y of the mixed signal Y(t) which has been shifted towards the angular frequency (ωo - ωr).

The ratio generator section 3a produces a ratio R of the I signal SI(t) and the Q signal SQ(t) (i.e., SQ(t)/SI(t)), while the sign detector section 3b detects the polarity of the I signal SI(t) and the Q signal SQ(t) to produce the sign signals GI(*) and GQ(*).

The inverse trigonometric operation section 4a performs an inverse tangent operation (arctan(R)) on the ratio R, thereby computing the phase α(t) corresponding to the ratio R.

Based on the sign signals GI(*) and GQ(*), the phase generator section 4b determines which quadrant in the phase range (0 to 2π) the phase α(t) should belong to, and then makes a phase correction to the phase α(t) based on the determination result. This allows for producing the correct phase φ(t) that belongs to the determined quadrant.

That is, the inverse trigonometric operation section 4a performs an inverse tangent operation on the ratio R to compute the phase α(t) corresponding thereto as shown in Fig. 5(c). That is, the phase α(t) may be computed as a phase within the range from -π/2 to π/2 so as not to match the polarity of the I signal SI(t) and the Q signal SQ(t).

In this context, in the same manner as described in relation to the embodiment (see Figs. 3(b) and (c)), the phase generator section 4b follows the property of the inverse trigonometric function to make the determination. That is, the phase generator section 4b determines that the phase α(t) should be in the first quadrant (0 to π/2) when both the sign signals GI(*) and GQ(*) are plus GI(+) and GQ(+); the phase α(t) in the second quadrant (π/2 to π) when they are minus GI(-) and plus GQ(+); the phase α(t) in the third quadrant (π to 3π/2) when they are both minus GI(-) and GQ (-); and the phase α(t) in the fourth quadrant (3π/2 to 2π) when they are plus GI(+) and minus GQ(-). Then, as shown in Fig. 3(c), based on the determination result, the phase generator section 4b makes a phase correction to the phase α(t) by a predetermined phase, thereby producing the correct phase φ(t).

Based on the phase φ(t), the carrier generator section 4c produces the first regenerated carrier signal SCI(t) corresponding to the I signal SI(t) and the second regenerated carrier signal SCQ(t) corresponding to the Q signal SQ (t). That is, to match the carrier component of the I signal SI produced by the orthogonal signal generation means 2, the phase φ(t) is applied to the cosine function, thereby producing the regenerated carrier signal SCI(t).

Furthermore, to match the carrier component of the Q signal SQ(t), the phase φ(t) is applied to the sine function, thereby producing the regenerated carrier signal SCQ(t). The regenerated carrier signals SCI(t) and SCQ(t) which have phases orthogonal to each other are thus produced as expressed by Equations (6a) and (6b) below.

[Equation 6]

$$SCI(t) = cos((\omega_o - \omega_r) t + \theta(t)) \quad \cdots (6a)$$
$$SCQ(t) = sin((\omega_o - \omega_r) t + \theta(t)) \quad \cdots (6b)$$

Now, a description will be made to the configuration of the demodulator 6.

As described above, the demodulator 6 is configured to include the carrier regenerator 1 and the synchronizer section 5.

The synchronizer section 5 includes a multiplier section 5a for multiplying the I signal SI(t) by the regenerated carrier signal SCI(t) (or mixing those signals) and a multiplier section 5b for multiplying the Q signal SQ(t) by the regenerated carrier signal SCQ(t) (or mixing those signals). The synchronizer section 5 further includes an adder section 5c for adding the outputs of the multiplier sections 5a and 5b, and delivers the result of addition from the adder section 5c as the demodulated signal SB. As such, the demodulation expressed by Equation (5) is performed, so that the demodulated signal SB is produced from the I signal SI(t) and the Q signal SQ(t) which possess the baseband signal f(t) component of the modulated signal Sin(t).

As described above, in the carrier regenerator 1 and the demodulator 6 of the present example, such a PLL loop as for the PLL synchronous detection is not required as in the aforementioned embodiment. The regenerated carrier signals SCI(t) and SCQ(t) are produced from the I signal SI(t) and the Q signal SQ(t) which appear as a new modulated signal. The I signal SI(t) and the Q signal SQ(t) are demodulated based on the regenerated carrier signals SCI(t) and SCQ(t), thereby allowing for producing the demodulated signal SB. It is thus possible to provide good trackability for the modulated signal Sin(t) and thereby produce the demodulated signal SB.

Furthermore, the carrier regenerator 1 of the present example can provide advantageous effects on the detection of a modulated signal obtained by linear modulation and perform synchronous detection, for example, on a modulated signal obtained by AM modulation or AM stereo modulation.

Note that in the carrier regenerator 1 described above, a correction is to be made to the phase $\alpha(t)$ to yield the correct phase $\varphi(t)$ based on the sign signals GI(*) and GQ(*) indicative of the polarity of the I signal SI(t) and the Q signal SQ(t). However, the property of the inverse tangent function allows for using only the sign signal GI(*) indicative of the polarity of the I signal SI(t) to determine which quadrant in the phase range (0 to $2\pi$) the phase $\alpha(t)$ should belong to. Accordingly, the sign detector section 3b can be configured to produce the sign signal GI(*) by detecting only the polarity of the I signal SI(t). On the other hand, the phase generator section 4b can be configured to determine, based on the sign signal GI(*), the quadrant to which the phase $\alpha(t)$ should belong, thereby making a correction to the phase $\alpha(t)$ to find the correct phase $\varphi(t)$.

Furthermore, the carrier regenerator 1 and the demodulator 6 described above may be formed in hardware such as transistor circuits or LSIs (integrated circuit device). Alternatively, a computer program which provides the same function as the hardware would do may be prepared. Then, DSPs (digital signal processor) or MPUs (microprocessor) may be operated on the computer program, thereby providing so-called software communications (software receptions). As in the embodiment, it is also possible to employ analog circuits or digital circuits.

<u>Second Example</u>

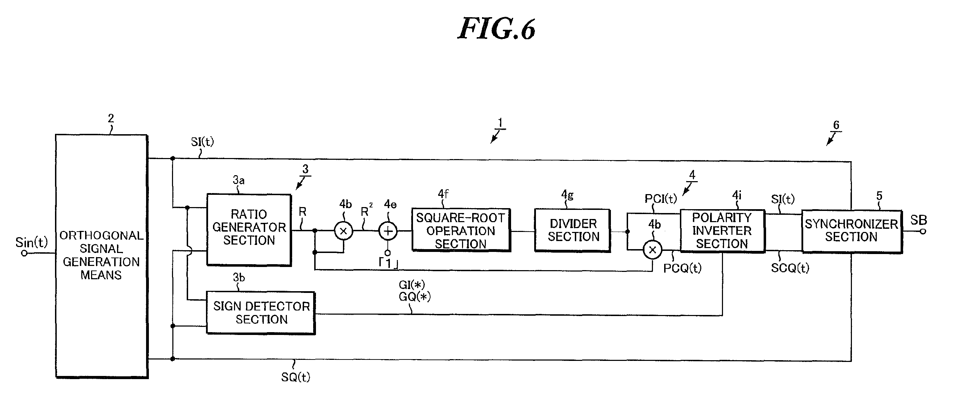

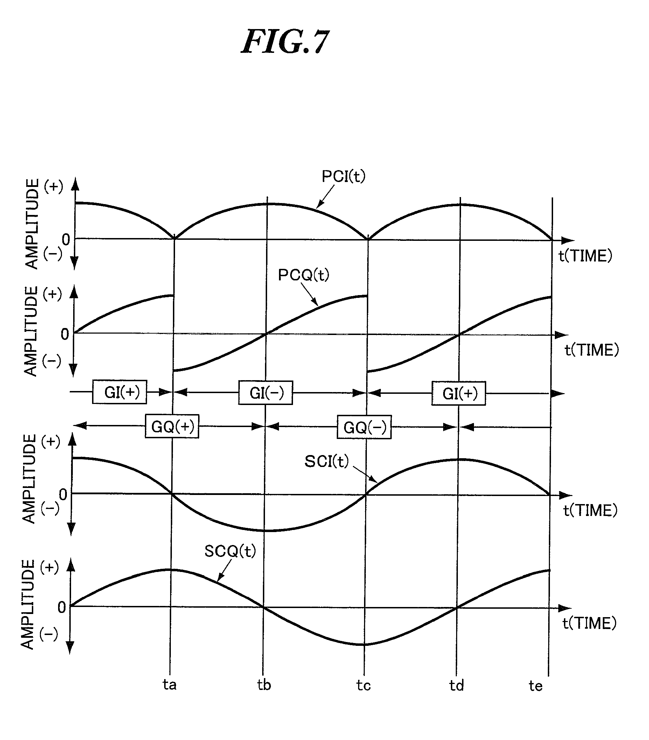

Now, with reference to Figs. 6 and 7, a description will be made to a carrier regenerator and a demodulator according to another example.

Fig. 6 is a block diagram illustrating the configuration of the carrier regenerator 1 and the demodulator 6 of the present example, in which the components that are the same as or equivalent to those of Fig. 2 and Fig. 4 are indicated with the same symbols. Fig. 7 is an explanatory view illustrating the function of the carrier regenerator 1.

In Fig. 6, the carrier regenerator 1 includes the orthogonal signal generator section 2 which is configured in the same manner as the orthogonal signal generation means 2 shown in Fig. 2 or the orthogonal signal generator section 2 shown in Fig. 4. The carrier regenerator 1 is configured to also include the ratio generator section 3a, the sign detector section 3b, multiplier sections 4d and 4h, an adder section 4e, a square-root operation section 4f, a divider section 4g, and a polarity inverter section 4i. Furthermore, the carrier generation means 4 are made up of the multiplier sections 4d and 4h, the adder section 4e, the square-root operation section 4f, the divider section 4g, and the polarity inverter section 4i.

The demodulator 6 is configured to have the carrier regenerator 1 and the synchronizer section 5. The synchronizer section 5 is configured in the same manner as the synchronizing means 5 shown in Fig. 2 or the synchronizer section 5 shown in Fig. 4.

First, a description will be made to the configuration of the carrier regenerator 1 of the present example in contrast with the first example.

In the carrier regenerator 1 of the first example (see Fig. 4), an inverse trigonometric operation is performed on a trigonometric ratio R for the phase $\alpha(t)$, and then a phase correction is made to the phase $\alpha(t)$ based on the sign signals GI(*) and GQ(*) to produce the correct phase $\varphi(t)$, and then the regenerated carrier signals SCI(t) and SCQ(t) are produced.

In contrast to this, the carrier regenerator 1 of the present example shown in Fig. 6 utilizes the relational expression of Equations (7a) and (7b) below that is obtained from the properties of trigonometric ratios R and trigonometric functions by differentiating an inverse trigonometric function in accordance with the differentiation of inverse trigonometric functions. More specifically, pre-signals PCI(t) and PCQ(t) having phases orthogonal to each other are produced from the ratio R, and a correction is made to the polarity of the pre-signals PCI(t) and PCQ(t) based on the sign signals GI(*) and GQ(*), thereby producing the regenerated carrier signals SCI(t) and SCQ(t).

$$PCI(t) = \cos\phi(t) = 1 / \{1 + \tan^2\phi(t)\}^{1/2} = 1 / (1 + R^2)^{1/2} \quad \cdots (7a)$$

$$PCQ(t) = \sin\phi(t) = \cos\phi(t) \times \tan\phi(t) = R / (1 + R^2)^{1/2} \qquad \cdots (7b)$$

That is, the ratio generator section 3a produces the ratio R (SQ(t)/SI(t)) of the I signal SI(t) and the Q signal SQ(t), which have been produced by the orthogonal signal generator section 2. The multiplier 4d computes a squared value ($R^2$) of the ratio R, and the adder 4e adds 1 to the squared value ($R^2$), thereby computing the value ($1 + R^2$) shown in Equation (7a) above. Furthermore, the square-root operation section 4f computes the square root value SQRT($1 + R^2$) of the value ($1 + R^2$), and the divider section 4g computes the reciprocal of the square root value SQRT($1 + R^2$).

This allows for computing a value ($1/(1 + R^2)^{1/2}$) shown in Equation (7a) above, which is in turn supplied as the pre-signal PCI(t) to the multiplier 4h and the polarity inverter section 4i. Furthermore, the multiplier 4h multiplies the value ($1/(1 + R^2)^{1/2}$) by the ratio R from the ratio generator section 3a to compute the value ($R/(1 + R^2)^{1/2}$) shown in Equation (7b) above, which is in turn supplied as the pre-signal PCQ(t) to the polarity inverter section 4i.

Here, when the pre-signals PCI(t) and PCQ(t) are computed from the instantaneous amplitude of the I signal SI(t) and the Q signal SQ(t), the value obtained in this computing step is inverted to either plus or minus. Thus, as illustrated in Fig. 7 as an example, the pre-signals PCI(t) and PCQ(t) are not yet produced as a correct regenerated carrier signal that is synchronous with the carrier component of the I signal SI(t) and the Q signal SQ(t).

In this context, a period is determined in which the polarity inverter section 4i inverts the polarity of the pre-signals PCI(t) and PCQ(t) based on at least the sign signal GI(*) or GQ(*). Then, based on the result of determination, the polarity of the pre-signals PCI(t) and PCQ(t) is inverted. That is, in the case of Fig. 7, the polarity of the pre-signals PCI(t) and PCQ(t) is inverted when the sign signal GI(*) is minus GI(-). As shown in Fig. 7, this allows for producing correct regenerated carrier signals SCI(t) and SCQ(t), which are in turn supplied to the synchronizer section 5.

Then, the synchronizer section 5 provided in the demodulator 6 mixes the I signal SI(t) with the regenerated carrier signal SCI(t), mixes the Q signal SQ(t) with the regenerated carrier signal SCQ(t), and combines the results of mixing or the two mixed signals. Thus, the demodulation expressed by Equation (5) is performed to produce the demodulated signal SB.

As described above, the carrier regenerator 1 and the demodulator 6 of the present example perform predetermined operations by making use of the properties of trigonometric ratios R and trigonometric functions. This allows for producing the pre-signals PCI(t) and PCQ(t) having phases orthogonal to each other directly from the trigonometric ratio R of the I signal SI(t) and the Q signal SQ(t), and for performing the polarity inversion processing based on the signs GI(*) and GQ(*). It is thus possible to quickly produce the regenerated carrier signals SCI(t) and SCQ(t) as well as the demodulated signal SB.

Furthermore, unlike the conventional PLL synchronous detection, the present example also directly produces a regenerated carrier, thereby eliminating the need for making difficult adjustments such as the adjustment of the loop bandwidth of a PLL loop system. Additionally, a simpler configuration can be employed when compared to that for the PLL synchronous detection.

Furthermore, the carrier regenerator 1 of the present example has advantageous effects on the detection of a modulated signal obtained by linear modulation, and can perform synchronous detection, for example, on a modulated signal obtained by AM modulation or AM stereo modulation.

Furthermore, the carrier regenerator 1 and the demodulator 6 described above may be formed in hardware such as transistor circuits or LSIs (integrated circuit device). Alternatively, a computer program which provides the same function as the hardware would do may be prepared. Then, DSPs (digital signal processor) or MPUs (microprocessor) may be operated on the computer program, thereby providing so-called software communications (software receptions). As in the embodiment, it is also possible to employ analog circuits or digital circuits.

Third Example

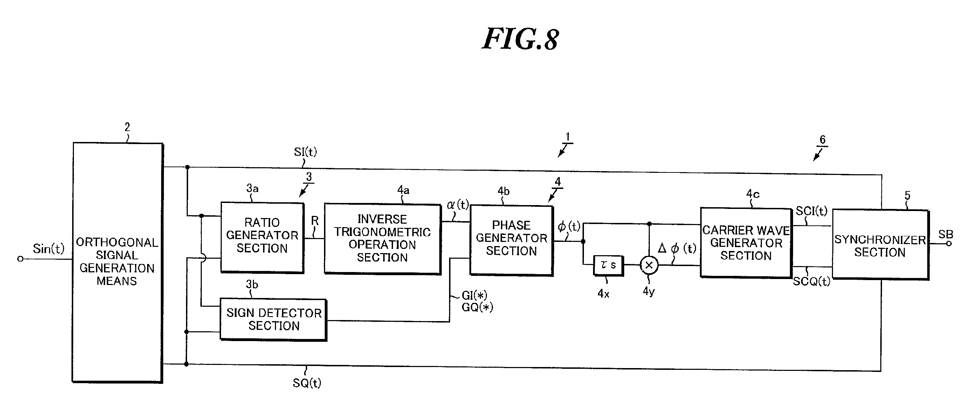

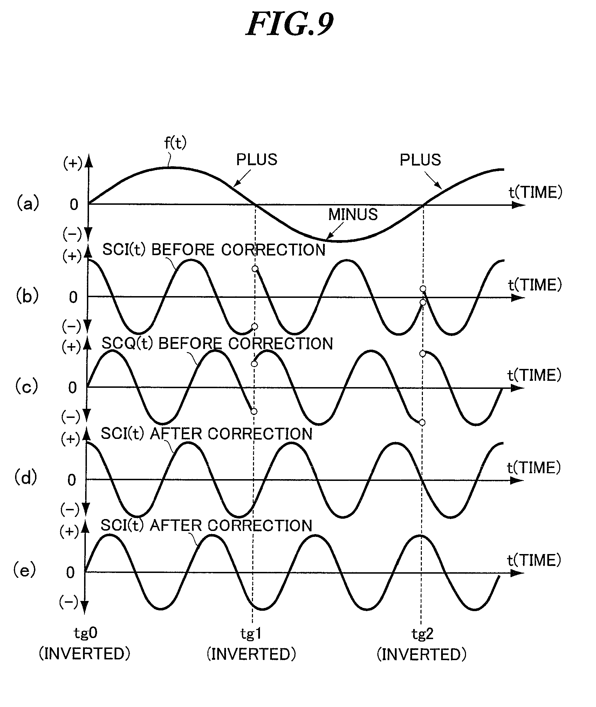

Now, with reference to Figs. 8 and 9, a description will be made to a carrier regenerator and a demodulator according to another example. Fig. 8 is a block diagram illustrating the configuration of the carrier regenerator 1 and the demodulator 6 of the present example, in which the components that are the same as or equivalent to those of Fig. 4 are indicated with the same symbols. Fig. 9 is an explanatory view illustrating the function of the carrier regenerator.

First, a description will be made to the functional differences between the carrier regenerator 1 of the present example and the carrier regenerator 1 of the first example shown in Fig. 4. The carrier regenerator 1 of the first example can reproduce the regenerated carrier signals SCI(t) and SCQ(t) when such a baseband signal f(t) as always having a plus polarity and modulated with the carrier g(t) is transmitted from a transmitting station. However, as illustrated in Fig. 9(a), suppose that the baseband signal f(t) varying between plus and minus polarities and modulated with the carrier g(t) is transmitted.

In this case, an inverse trigonometric operation may be performed on a ratio R for the phase $\alpha(t)$, and the phase $\alpha(t)$

may be corrected based on the sign signals GI(*) and GQ(*) to provide the phase φ(t). The regenerated carrier signals SCI(t) and SCQ(t) may be thus produced. In this case, as illustrated in Figs. 9(b) and (c), the polarity of the regenerated carrier signals SCI(t) and SCQ(t) may be inverted so as not to provide a correct signal.

The carrier regenerator 1 of the present example is provided with a function which eliminates such a problem and properly produces the regenerated carrier signals SCI(t) and SCQ(t) even when the baseband signal f(t) varies between plus and minus polarities.

In Fig. 8, the carrier regenerator 1 of the present example is configured such that the carrier regenerator 1 shown in Fig. 4 is provided with a delay section 4x and a differentiator 4y. Additionally, the phase φ(t) produced by the phase generator section 4b and the phase difference Δφ(t) expressed by (φ(t) - φ(t + τs)) produced by the delay section 4x and the differentiator 4y are supplied to the carrier generator section 4c.

Here, the delay section 4x is set at a delay time τs which is equivalent to the reciprocal (1/fs) of frequency fs that satisfies the sampling theorem with respect to the frequency bandwidth of the I signal SI(t) and the Q signal SQ(t) (or, the frequency bandwidth of the modulated signal Sin(t)). The delay section 4x delays the phase φ(t) produced by the phase generator section 4b and then supplies the delayed phase φ(t + τs) to the differentiator 4y.

The carrier generator section 4c of the present example compares the absolute value |Δφ(t)| of the phase difference Δφ(t) supplied from the differentiator 4y with a predetermined threshold value THDφ. As shown in Figs. 9(a) and (b), when the absolute value |Δφ(t)| is detected to be greater than the threshold value THDφ, it is determined that the regenerated carrier signals SCI(t) and SCQ(t) are to be produced with inverted polarities.

Then, during the period (referred to as an "inversion period") from the point in time tg1 of determination to a subsequent point in time tg2 at which the absolute value |Δφ(t)| is detected to have exceeded the threshold value THDφ, a correction is made by adding phase π to the phase φ(t) to yield phase (φ(t) + π). Then, the phase (φ(t) + π) is applied to a cosine function, thereby producing the regenerated carrier signal SCI(t) equivalent to the carrier component of the I signal SI (t). Furthermore, the phase (φ(t) + π) is applied to a sine function, thereby producing the regenerated carrier signal SCQ (t) equivalent to the carrier component of the Q signal SQ(t).

Here, the carrier generator section 4c determines the aforementioned polarity inversion at points in time tg0, tg1, tg2 ..., but makes corrections to the phase φ(t) during alternate periods to yield the phase (φ(t) + π).

That is, during the period from the point in time tg0 to tg1 (referred to as a "non-inversion period"), the phase φ(t) is applied to a cosine function, thereby producing the regenerated carrier signal SCI(t) equivalent to the carrier component of the I signal SI(t). Additionally, the phase φ(t) is applied to a sine function, thereby producing the regenerated carrier signal SCQ(t) equivalent to the carrier component of the Q signal SQ(t).

During the following period from the point in time tg1 to tg2 (an inversion period), the phase (φ(t) + π) is applied to a cosine function, thereby producing the regenerated carrier signal SCI(t) equivalent to the carrier component of the I signal SI(t). Additionally, the phase (φ(t) + π) is applied to a sine function, thereby producing the regenerated carrier signal SCQ(t) equivalent to the carrier component of the Q signal SQ(t).

During the following period from the point in time tg2 to tg3 (a non-inversion period), the phase φ(t) is applied to a cosine function, thereby producing the regenerated carrier signal SCI(t) equivalent to the carrier component of the I signal SI (t). Additionally, the phase φ(t) is applied to a sine function, thereby producing the regenerated carrier signal SCQ(t) equivalent to the carrier component of the Q signal SQ(t). As such, the phase φ(t) is corrected to yield the phase (φ(t) + π) during alternate periods.

Thus, the carrier generator section 4c corrects the phase φ(t) to yield the phase (φ(t) + π) during alternate periods. As illustrated in Figs. 9(d) and (e), this allows for producing correct regenerated carrier signals SCI(t) and SCQ (t), which are in turn supplied to the synchronizer section 5. Then, the synchronizer section 5 produces the demodulated signal SB using the I signal SI(t), the Q signal SQ(t), and the regenerated carrier signals SCI(t) and SCQ(t).

As described above, according to the carrier regenerator 1 of the present example, it is possible to produce the regenerated carrier signals SCI(t) and SCQ(t) even when the baseband signal f(t) of the modulated signal Sin(t) varies between plus and minus polarities.

Furthermore, unlike the conventional PLL synchronous detection, the present example also directly produces a regenerated carrier, thereby eliminating the need for making difficult adjustments such as the adjustment of the loop bandwidth of a PLL loop system. Additionally, a simpler configuration can be employed when compared to that for the PLL synchronous detection.

Fourth Example

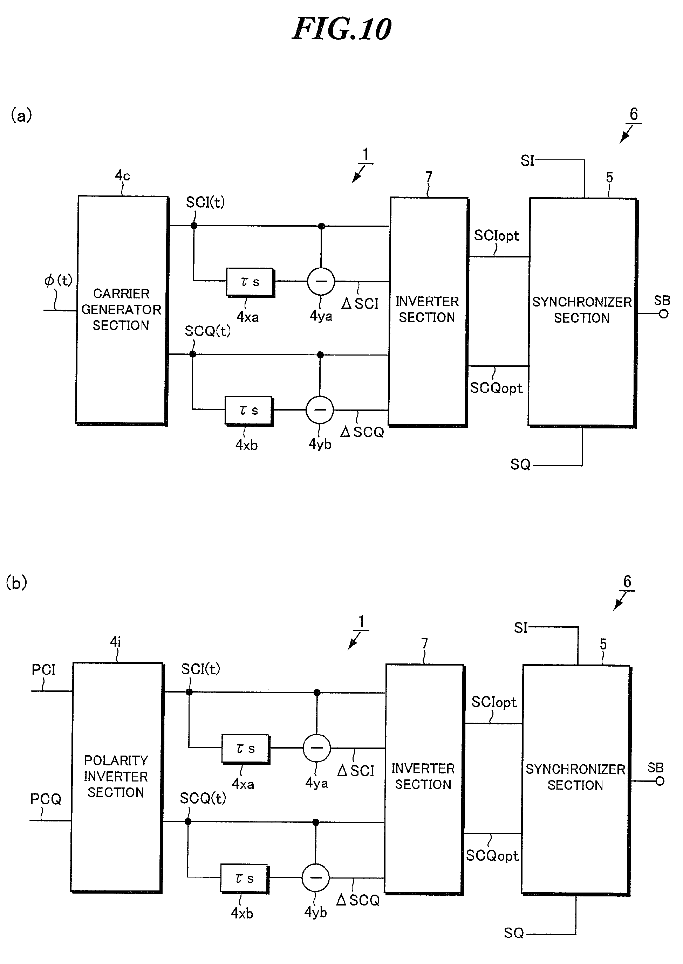

Now, with reference to Fig. 10, a description will be made to the carrier regenerator 1 according to still another example.

The carrier regenerator 1 of the present example is also configured to employ a predetermined correction function and thereby produce a correct regenerated carrier signal when the baseband signal f(t) of the modulated signal Sin(t) varies between plus and minus polarities.

Note that Fig. 10(a) shows an example in which the means for making use of the aforementioned correction function are provided downstream of the carrier generator section 4c shown in Fig. 5. Fig. 10(b) shows an example in which the means for making use of the aforementioned correction function are provided downstream of the polarity inverter section 4i shown in Fig. 6. Now, a description will be made to the two examples in turn.

Example of Fig. 10(a)

The carrier regenerator 1 shown in Fig. 10(a) includes delay sections 4xa and 4xb for delaying the regenerated carrier signals SCI(t) and SCQ(t), which have been produced by the carrier generator section 4c shown in Fig. 5, by a predetermined delay time $\tau$s. The carrier regenerator 1 further includes differentiators 4ya and 4yb for producing differences $\Delta$SCI and $\Delta$SCQ between the delayed signals and the regenerated carrier signals SCI(t) and SCQ(t), respectively. The carrier regenerator 1 also includes an inverter section 7 for receiving the regenerated carrier signals SCI(t) and SCQ(t), and the differences $\Delta$SCI and $\Delta$SCQ. After having been corrected, regenerated carrier signals SCIopt and SCQopt produced by the inverter section 7 are supplied to the synchronizer section 5 for demodulation. Note that the delay time $\tau$s is set at a time that satisfies the sampling theorem in the same manner as mentioned in relation to the third example.

The inverter section 7 compares each of the absolute values |$\Delta$SCI| and |$\Delta$SCQ| of the differences $\Delta$SCI and $\Delta$SCQ with a predetermined threshold value THDab. When at least one absolute value is detected to be greater than the threshold value THDab, it is determined that the polarity of the regenerated carrier signals SCI(t) and SCQ(t) having been supplied from the carrier generator section 4c was inverted.

Then, during the period from the point in time of determination of the polarity inversion to the subsequent point in time of determination of a polarity inversion, the polarity of the regenerated carrier signals SCI(t) and SCQ(t) received is inverted. Furthermore, during the period up to the subsequent point in time of determination of a polarity inversion, no inversion takes place. From this time onward, the inversion processing is carried out during alternate periods in the same manner.

As such, the inverter section 7 determines that the absolute values |$\Delta$SCI| and |$\Delta$SCQ| have exceeded the threshold value THDab, and inverts the received regenerated carrier signals SCI(t) and SCQ(t) during alternate periods. A correction is thus made to provide correct regenerated carrier signals SCIopt and SCQopt for output.

Example of Fig. 10(b)

The carrier regenerator 1 shown in Fig. 10(b) includes the delay sections 4xa and 4xb that delay the regenerated carrier signals SCI(t) and SCQ(t), which have been produced by the polarity inverter section 4i shown in Fig. 6, by a predetermined delay time $\tau$s (which satisfies the sampling theorem). The carrier regenerator 1 further includes the differentiators 4ya and 4yb that produce the differences $\Delta$SCI and $\Delta$SCQ between the delayed signals and the regenerated carrier signals SCI(t) and SCQ(t), respectively.

The carrier regenerator 1 also includes the inverter section 7 which receives the regenerated carrier signals SCI(t) and SCQ(t), and the differences $\Delta$SCI and $\Delta$SCQ. After having been corrected, the regenerated carrier signals SCIopt and SCQopt produced by the inverter section 7 are supplied to the synchronizer section 5 for demodulation.

Then, the inverter section 7 of the present example compares each of the absolute values |$\Delta$SCI| and |$\Delta$SCQ| of the differences $\Delta$SCI and $\Delta$SCQ with the predetermined threshold value THDab. When at least one absolute value is detected to be greater than the threshold value THDab, it is determined that the polarity of the regenerated carrier signals SCI(t) and SCQ(t) having been supplied from the carrier generator section 4c was inverted.

Then, during the period from the point in time of determination of the polarity inversion to the subsequent point in time of determination of a polarity inversion, the polarity of the regenerated carrier signals SCI(t) and SCQ(t) received is inverted. Furthermore, during the period up to the subsequent point in time of determination of a polarity inversion, no inversion takes place. From this time onward, the inversion processing is carried out during alternate periods in the same manner.

As such, the inverter section 7 determines that the absolute values |$\Delta$SCI| and |$\Delta$SCQ| have exceeded the threshold value THDab, and inverts the received regenerated carrier signals SCI(t) and SCQ(t) during alternate periods. Thus, a correction is made to provide correct regenerated carrier signals SCIopt and SCQopt for output.

As such, the carrier regenerator 1 shown in Figs. 10(a) and (b) inverts the polarity of the regenerated carrier signals SCI(t) and SCQ(t) when the baseband signal f(t) varies between plus and minus, thereby allowing for making a correction to provide correct regenerated carrier signals SCIopt and SCQopt.

**Claims**

1.  A carrier regenerator for producing a regenerated carrier signal from a modulated signal, the carrier regenerator comprising:

    - orthogonal signal generation means for producing from the modulated signal a first signal and a second signal which have phases orthogonal to each other;
    - ratio generation means for producing a trigonometric ratio of the first signal and the second signal and detecting a sign of at least one of the first signal and the second signal; and
    - carrier generation means for producing the regenerated carrier signal based on the trigonometric ratio and the sign.

2.  The carrier regenerator according to claim 1,
    wherein the carrier generation means perform an inverse trigonometric operation on the trigonometric ratio to determine a phase therefor, and make a phase correction to the phase based on the sign, thereby producing the regenerated carrier signal based on the phase-corrected phase, the regenerated carrier signal being a carrier component of the first signal and the second signal.

3.  The carrier regenerator according to claim 2,
    wherein the carrier generation means detect a change in time of the phase-corrected phase, and when the change in time exceeds a predetermined threshold value, invert a polarity of the regenerated carrier signal.

4.  The carrier regenerator according to claim 1 or 2,
    wherein the carrier generation means detect a change in time of the regenerated carrier signal, and when the change in time exceeds a predetermined threshold value, invert a polarity of the regenerated carrier signal.

5.  The carrier regenerator according to claim 1,
    wherein the carrier generation means compute the trigonometric ratio produced by the ratio generation means based on a function determined by differentiating an inverse trigonometric function, thereby producing the regenerated carrier signal, the regenerated carrier signal being a carrier component of the first signal and the second signal.

6.  The carrier regenerator according to claim 5,
    wherein the carrier generation means invert a polarity of the regenerated carrier signal based on the sign produced by the ratio generation means.

7.  The carrier regenerator according to claim 5 or 6,
    wherein the carrier generation means detect a change in time of the regenerated carrier signal, and when the change in time exceeds a predetermined threshold value, invert a polarity of the regenerated carrier signal.

8.  A demodulator, comprising:

    - synchronizing means for demodulating the first signal and the second signal based on the regenerated carrier produced by the carrier regenerator according to any one of claims 1 to 7, thereby producing a modulated signal.

9.  A carrier generation method for producing a regenerated carrier signal from a modulated signal, the method comprising the following steps:

    - an orthogonal signal generation step of producing from the modulated signal a first signal and a second signal which have phases orthogonal to each other;
    - a ratio generation step of producing a trigonometric ratio of the first signal and the second signal and detecting a sign of at least one of the first signal and the second signal; and
    - a carrier generation step of producing the regenerated carrier signal based on the trigonometric ratio and the sign.

10.  A demodulation method, comprising

    - a synchronizing step of demodulating the first signal and the second signal based on the regenerated carrier produced by the carrier generation method according to claim 9, thereby producing a modulated signal.

# FIG.1

IF SIGNAL (INPUT) → MIXER → BANDWIDTH LIMITING LOW-PASS FILTER → DEMODULATED SIGNAL (OUTPUT)

VCO — LOOP FILTER

PRIOR ART

# FIG.2

EP 1 983 710 A1

# FIG.3

(a)

(+)

0    SI(t)    t(TIME)

(−)

(+)

0    SQ(t)    t(TIME)

(−)

GI(+) | GI(−) | GI(−) | GI(+)
GQ(+) | GQ(+) | GQ(−) | GQ(−)

(b)

$\pi/2$

FIRST QUADRANT

$\boxed{L}$

SECOND QUADRANT

$\alpha(t)$   $\boxed{SQ}$

$\pi$   0   O $(2\pi)$

$\boxed{SI}$

THIRD QUADRANT   FOURTH QUADRANT

$3\pi/2$

(c) [FLOW DIAGRAM FOR CREATING PHASE $\phi(t)$ FROM TANGENT TRIGONOMETRIC RATIO R]

GI(∗).
GQ(∗)   [SIGN DETERMINATION]    [REGION DETERMINATION]    [PHASE CORRECTION]

| GI(+), GQ(+) | FIRST QUADRANT $0 \sim \pi/2$ | $\phi(t) = \alpha(t)$ |
| GI(−), GQ(+) | SECOND QUADRANT $\pi/2 \sim \pi$ | $\phi(t) = \pi - \mid \alpha(t) \mid$ |
| GI(−), GQ(−) | THIRD QUADRANT $\pi \sim 3\pi/2$ | $\phi(t) = \pi + \mid \alpha(t) \mid$ |
| GI(+), GQ(−) | FOURTH QUADRANT $3\pi/2 \sim 2\pi$ | $\phi(t) = 2\pi - \mid \alpha(t) \mid$ |

*FIG.4*

16

# *FIG.5*

(a)

ANGULAR FREQUENCY

$\omega o - \omega r$    $\omega o$    $\omega o + \omega r$

SI(t)BAND

(b)

ANGULAR FREQUENCY

$\omega o - \omega r$    $\omega o$    $\omega o + \omega r$

SQ(t)BAND

(c)

## FIG.6

EP 1 983 710 A1

# FIG.7

# FIG.8

# FIG.9

# FIG.10

(a)

(b)

## INTERNATIONAL SEARCH REPORT

| International application No. |
|---|
| PCT/JP2006/323586 |

A. CLASSIFICATION OF SUBJECT MATTER
*H04L27/00*(2006.1)i

According to International Patent Classification (IPC) or to both national classification and IPC

B. FIELDS SEARCHED

Minimum documentation searched (classification system followed by classification symbols)
*H04L27/00*(2006.1)

Documentation searched other than minimum documentation to the extent that such documents are included in the fields searched

| | | |
|---|---|---|
| Jitsuyo Shinan Koho | 1922-1996 | Jitsuyo Shinan Toroku Koho 1996-2006 |
| Kokai Jitsuyo Shinan Koho | 1971-2006 | Toroku Jitsuyo Shinan Koho 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-151016 A (Nippon Telegraph And Telephone Corp.), 09 June, 2005 (09.06.05), Par. Nos. [0022] to [0027]; Fig. 1 (Family: none) | 1-10 |
| A | JP 11-122318 A (Toyo Communication Equipment Co., Ltd.), 30 April, 1999 (30.04.99), Par. Nos. [0015] to [0016]; Fig. 1 (Family: none) | 1-10 |
| A | JP 3-205940 A (Nippon Telegraph And Telephone Corp.), 09 September, 1991 (09.09.91), Lower left column, lines 3 to 15; Fig. 17 & EP 0451289 A1 | 1-10 |

☐ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 07 December, 2006 (07.12.06) | 19 December, 2006 (19.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)